# FASCICULE DE BREVET EUROPEEN

(11) **EP 0 631 719 B1**
(45) Date de publication et mention de la délivrance du brevet: **07.01.1998**
(21) Numéro de dépôt: 94460017.0
(22) Date de dépôt: 17.06.1994
(51) Int. Cl.: A01K 1/01

(54) **Bac de récupération de lisier**
Güllesammelbehälter
Liquid manure collection tank

(30) Priorité: 30.06.1993 FR 9308231
(43) Date de publication de la demande: 04.01.1995
(73) Titulaire: I-TEK SA, F-22250 Tremeur (FR)
(72) Inventeur: Lesnard, Pierre, F-22250 Tremeur (FR)
(74) Mandataire: Le Guen, Louis François

(56) Documents cités:
- EP-A- 0 155 842
- FR-A- 2 273 470
- US-A- 5 148 771

## Description

La présente invention concerne un bac de récupération de lisier qui est installé sous le caillebotis d'une case d'élevage de porcs. Par case d'élevage de porcs, on entend aussi bien une case de maternité qu'une case de post-sevrage ou qu'une case d'élevage de porcs adultes. L'invention concerne encore les moyens d'interconnexion d'une pluralité de tels bacs de récupération afin d'assurer l'évacuation du lisier, par exemple vers une fosse à lisier.

Il est connu que, dans les porcheries, le volume du lisier ou de matières excrémentielles, en particulier d'urine, est extrêmement important si on le compare aux volumes que l'on rencontre dans les autres élevages. L'enlèvement de ces volumes de matières constitue un des plus grands problèmes rencontrés dans l'élevage de porcs. Traditionnellement, une case d'élevage de porcs comprend quatre cloisons et un caillebotis sensiblement horizontal sous lequel est prévu un plancher en béton qui peut être incliné afin de faciliter la collecte des excréments dans un caniveau. La surface du plancher en béton n'est pas assez lisse pour qu'il n'y ait pas des parties solides d'excrément qui y restent accrochées. Donc, il est nécessaire de nettoyer ce plancher en utilisant des jets d'eau, ce qui augmente d'une manière prohibitive le volume total de liquide pollué à éliminer. Or on sait que les règles anti-pollutions de protection de l'environnement sont très strictes car les excréments même mélangés à de l'eau ne peuvent être rejetés comme de simples eaux usées.

Un des objets de l'invention consiste à prévoir un moyen permettant de ne rejeter dans une fosse à lisier que le volume excrémentiel sans lui ajouter de l'eau, la fosse à lisier étant ensuite vidée pour épandage en respectant les règles en vigueur à ce sujet.

On a envisagé de revêtir le plancher en béton de feuilles métalliques, mais les acides uriques contenus dans le lisier attaquent le métal. L'état de la technique relatif à la récupération du lisier est illustré par les documents FR-A-2 273 470 et EP-A-0 155 842.

Un objet de l'invention consiste à prévoir un bac de récupération en matière plastique ce qui permet d'éviter les inconvénients de la corrosion du bac par des agents chimiques contenus dans le lisier. Plus particulièrement, l'invention prévoit un bac de récupération destiné à être installé sous une case individuelle d'élevage.

Suivant une caractéristique de l'invention, le bac de récupération en matière plastique, présentant un plan de symétrie vertical confondu avec le plan de symétrie vertical du caillebotis, comporte un fond incliné de l'avant vers l'arrière, comprenant une première partie avant dont chaque partie symétrique comporte un dièdre composé d'une première face triangulaire dont un premier côté est adjacent au côté avant horizontal du caillebotis, un deuxième côté est dans ledit plan de symétrie et le troisième côté est formé par l'arête du dièdre, et une deuxième face triangulaire dont un premier côté est formé par l'arête dudit dièdre, un deuxième côté est adjacent à une portion du côté latéral du caillebotis et le troisième côté descend dudit côté latéral du caillebotis jusqu'au sommet de la première face dans ledit plan de symétrie, le plan de ladite première face descendant depuis le premier côté transversal avant vers l'arrière, et une seconde partie arrière de forme pyramidale renversée dont chaque partie symétrique se compose d'une troisième face courbe quasi-triangulaire partant dudit troisième côté de ladite deuxième face vers une ouverture arrière, d'une quatrième face trapézoidale dont la grande base est adjacente à la portion arrière du côté latéral du caillebotis, dont la petite base est dans ledit plan de symétrie confondue avec ladite ouverture arrière et dont les côtés obliques sont respectivement communs avec la troisième face et avec la cinquième, la cinquième face triangulaire ayant un côté adjacent au côté transversal arrière du caillebotis et un côté dans ledit plan de symétrie, ladite ouverture arrière étant au fond du bac et étant reliée à un tuyau d'écoulement.

Suivant une autre caractéristique, la première partie avant occupe environ les 2/3 de la longueur totale du bac, se trouvant par exemple, sous la truie d'une case de maternité, la seconde partie arrière constituant un espace de stockage non situé directement sous la truie.

Suivant une autre caractéristique, la première face triangulaire a une pente de l'avant vers l'arrière de 2 à 4 % environ.

Suivant une autre caractéristique, la troisième face a une ligne de plus grande pente de l'avant vers l'arrière qui fait un angle de 12 % environ.

Suivant une autre caractéristique, la seconde face a une pente du côté latéral vers le milieu du bac, dans ledit plan de symétrie, de 11 % environ.

Suivant une autre caractéristique, la quatrième face a une pente du côté latéral vers ladite ouverture arrière de 10 % environ.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en plan d'un bac de récupération suivant l'invention,
la Fig. 2 est une vue en coupe longitudinale du bac, suivant la ligne II-II de la Fig. 1,
la Fig. 3 est une vue en coupe transversale du bac, suivant la ligne III-III de la Fig. 1, et
la Fig. 4 est une vue en coupe transversale du bac, suivant la ligne IV-IV de la Fig. 1.

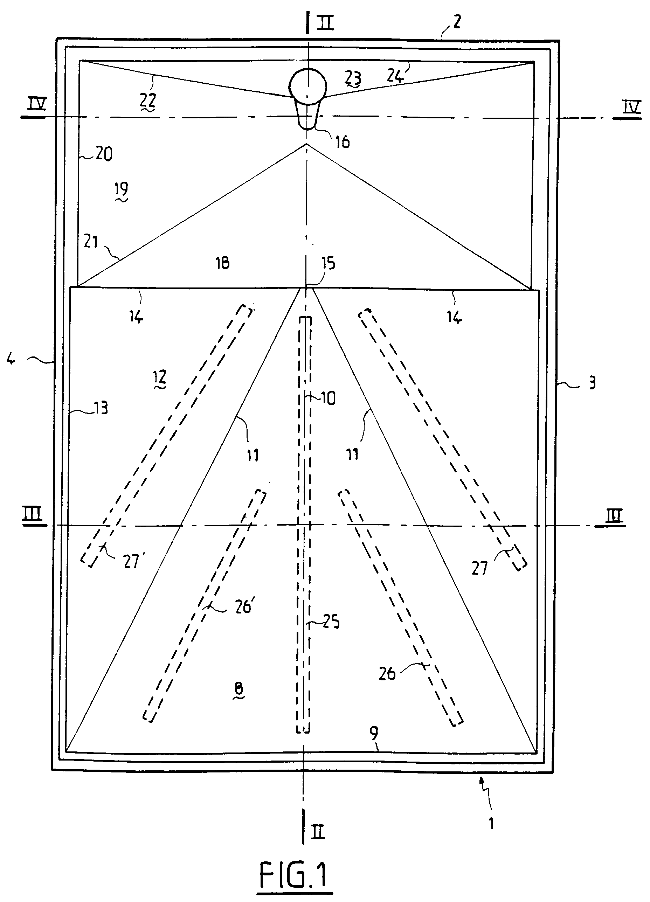

Le bac de récupération de la Fig. 1 a une forme rectangulaire qui correspond à la forme d'un caillebotis sous lequel il est installé dans une porcherie. Le bac comprend, vu en plan, un coté tranversal avant 1, un côté transversal arrière 2 et deux côtés latéraux 3 et 4; il a un plan de symétrie vertical dont la trace II-II est visible à la Fig. 1.

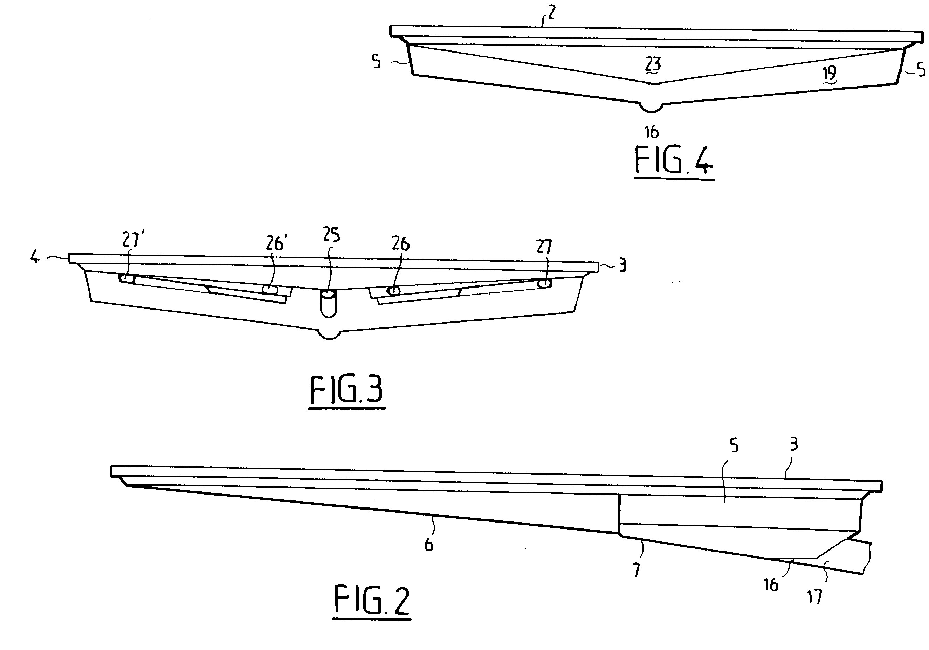

Le bac se compose classiquement d'une paroi latérale, sensiblement verticale 5, Fig. 2, qui l'entoure, et d'un fond qui forme la partie caractéristique de l'invention. Comme le montre la Fig. 2, on peut distinguer, dans ce fond, deux parties qui présentent, dans le plan de symétrie II-II, des pentes différentes une partie avant 6 partant du côté 1 et descendant vers l'arrière avec une pente plus faible de l'ordre de 2 à 4 % et une partie arrière 7, poursuivant la partie 6 jusqu'au côté 2, en descendant avec une pente plus forte de l'ordre de 12 %.

Vue en plan, Fig. 1, la partie avant 6 comprend deux parties symétriques par rapport au plan II-II, qui comprennent chacune un dièdre composé d'une première face triangulaire 8 dont un premier côté 9 est voisin du côté 1, un deuxième côté 10 dans le plan de symétrie II-II et un troisième côté 11 formé par l'arête du dièdre, et une deuxième face triangulaire 12 dont un premier côté commun avec le côté 11, un deuxième côté 13 voisin du côté latéral 4 et un troisième côté 14 qui descend du côté latéral 4 jusqu'au sommet 15 de la première face 8 dans le plan de symétrie II-II.

Les pentes des faces 12, descendant des côtés latéraux 3 et 4 vers la trace II-II sont de l'ordre de 11 %.

Toujours vue en plan, Fig. 1, la partie arrière 7 du fond du bac a une forme pyramidale renversée dont le sommet 16 est constitué par un ouverture arrière qui est reliée à un tuyau d'écoulement 17 dont l'inclinaison, voisine de 12 %, correspond à celle de la partie arrière 7. On distingue, dans cette partie 7, une troisième face courbe quasi-triangulaire 18 descendant des côtés 14 vers l'ouverture arrière 16, une quatrième face trapézoïdale 19 dont la grande base 20 est voisine du côté latéral 4, la petite base se confond avec l'ouverture 16 et les côtés obliques 21 et 22 sont respectivement communs avec la troisième face 18 et avec la cinquième face triangulaire 23, qui a un côté 24 voisin du côté transversal 2 et dont le sommet est situé dans l'ouverture 16.

Les pentes des faces 19 descendant vers l'ouverture 16 sont de l'ordre de 10 %.

En pratique les faces 8 de la partie avant 6 ne sont pas planes, mais gauches avec, comme le montre la Fig. 2, un plan de tangence central perpendiculaire au plan de symétrie II-II. Il en est de même pour les faces 18 de la partie arrière 7.

Comme le montre la coupe de la Fig. 3, qui est une vue de l'avant vers l'arrière, la partie avant 6 est renforcée par des tubes 25, 26, 27 qui sont soudés sous la surface inférieure du fond. Le tube 25 est situé dans le plan de symétrie II-II, les tubes 26 sous les faces 8, et les tubes 27 sous les faces 13. Vus en plan, Fig. 1, les tubes 26 sont symétriques et forment des branches en V, comme les tubes 27.

La coupe de la Fig. 4, vue vers l'arrière, montre plus particulièrement le départ du conduit 17 qui débouche dans l'ouverture 16. Y est aussi visible la face 23 et les faces latérales 5, ainsi que la pente des faces 19 qui est voisine de 10 %.

En pratique, le matériau qui constitue le fond et les parois latérales du bac est un matériau plastique, tel que du PVC ou un polyester. Ce matériau lisse assure, étant donné les pentes qui sont choisies pour les faces, la descente lente des excréments solides vers le point le plus bas, c'est-à-dire l'ouverture 16.

Le conduit 17 est raccordé à une conduite générale d'évacuation des excréments de la porcherie. Une vanne est montée sur le conduit 17 que le personnel de service vient ouvrir avec une fréquence de deux à trois fois par semaine pour que les excréments stockés au-dessus de l'ouverture 16 puissent s'écouler.

La surface du fond du bac est pratiquement sans solution de continuité pour éviter les points ou les lignes d'accrochage de matière solide.

## Revendications

1. Bac de récupération de lisier en matière plastique, tel que du PVC ou un polyester, présentant un plan de symétrie vertical confondu avec le plan de symétrie vertical du caillebotis et comportant un fond incliné de l'avant vers l'arrière, caractérisé en ce qu'il comprend une première partie avant (6) dont chaque partie symétrique comporte un dièdre composé d'une première face triangulaire (8) dont un premier côté (9) est adjacent au côté avant horizontal (1) du caillebotis, un deuxième côté (10) est dans ledit plan de symétrie (II-II) et le troisième côté (11) est formé par l'arête du dièdre, et une deuxième face triangulaire (12) dont un premier côté est formé par l'arête dudit dièdre, un deuxième côté (13) est adjacent à une portion du côté latéral du caillebotis et le troisième côté (14) descend dudit côté latéral du caillebotis jusqu'au sommet (15) de la première face dans ledit plan de symétrie, le plan de ladite première face (8) descendant depuis le premier côté transversal avant (1) vers l'arrière, et une seconde partie arrière (7) de forme pyramidale renversée dont chaque partie symétrique se compose d'une troisième face courbe quasi-triangulaire (18) partant dudit troisième côté (14) de ladite deuxième face (12) vers une ouverture arrière (16), d'une quatrième face trapézoïdale (19) dont la grande base (20) est adjacente à la portion arrière du côté latéral (3 ou 4) du caillebotis, dont la petite base est dans ledit plan de symétrie confondue avec ladite ouverture arrière (16) et dont les côtés obliques (21, 22) sont respectivement communs avec la troisième face (18) et avec la cinquième (23), la cinquième face triangulaire (23) ayant un côté (24) adjacent au côté transversal arrière (2) du caillebotis et un côté dans ledit plan de symétrie, ladite ouverture arrière (16) étant au fond du bac et étant reliée à un tuyau d'écoulement (17).

2. Bac de récupération selon la revendication 1, caractérisé en ce que la première face triangulaire (8) a une pente de l'avant vers l'arrière de 2 à 4 % environ.

3. Bac de récupération selon la revendication 1, caractérisé en ce que la troisième face (18) a une ligne de plus grande pente de l'avant vers l'arrière de 12 % environ.

4. Bac de récupération selon la revendication 1, caractérisé en ce que la seconde face (12) a une pente du côté latéral vers le milieu du bac, dans ledit plan de symétrie, de 11 % environ.

5. Bac de récupération selon la revendication 1, caractérisé en ce que la quatrième face (19) a une pente du côté latéral vers ladite ouverture arrière de 10 % environ.

6. Bac de récupération selon l'une des revendications précédentes, caractérisé en ce que la première partie avant (6) occupe environ les 2/3 de la longueur totale du bac.

## Claims

1. A recovery tray for liquid manure, made of plastic material such as PVC or polyester, featuring a vertical plane of symmetry merging with the vertical plane of symmetry of the grating and comprising a base inclined from front to rear, characterised in that it comprises a first front section (6) of which each symmetrical part comprises a dihedral composed of a first triangular face (8), of which a first side (9) is adjacent to the front horizontal side (1) of the grating, a second side (10) is in the said plane of symmetry (II-II), and the third side (11) is formed by the ridge of the dihedral, and a second triangular face (12) of which a first side is formed by the ridge of the said dihedral, a second side (13) is adjacent to a part of the lateral edge of the grating, and the third side (14) falls from the said lateral edge of the grating to the top (15) of the first face in the said plane of symmetry, the plane of the said first face (8) falling from the first front transverse side (1) to the rear, and a second rear part (7), of inverted pyramidal shape, of which each symmetrical part is composed of a third cambered and semi-triangular face (18), running from the said third side (14) of the said second face (12) towards a rear aperture (16), of a fourth trapezoidal face (19), of which the broad base (20) is adjacent to the rear portion of the lateral edge (3 or 4) of the grating, the small base of which is in the said plane of symmetry which merges with the said rear aperture (16), and the oblique sides (21, 22) of which are common, respectively, with the third face (18) and with the fifth (23), the fifth triangular face (23) having a side (24) adjacent to the rear transverse side (2) of the grating, and a side in the said plane of symmetry, the said rear aperture (16) being at the base of the tray, and being connected to a drainage pipe (17).

2. A recovery tray according to Claim 1, characterised in that the first triangular face (8) has a gradient from front to rear of approximately 2 to 4 %.

3. A recovery tray according to Claim 1, characterised in that the third face (18) has a greater gradient of fall from front to rear, of approximately 12 %.

4. A recovery tray according to Claim 1, characterised in that the second face (12) has a fall from the lateral edge to the centre of the tray, in the said plane of symmetry, of approximately 11 %.

5. A recovery tray according to Claim 1, characterised in that the fourth face (19) has a fall from the lateral edge to the said rear aperture of approximately 10 %.

6. A recovery tray according to one of the preceding Claims, characterised in that the first front part (6) occupies approximately 2/3 of the total length of the tray.

## Patentansprüche

1. Güllesammelbehälter aus Kunststoff, wie beispielsweise PVC oder einem Polyester, der eine vertikale Symmetrieebene aufweist, die mit der vertikalen Symmetrieebene des Spaltenbodens zusammenfällt, und bestehend aus einem von vorne nach hinten geneigten Boden, dadurch gekennzeichnet, daß er aus einem ersten vorderen Teil (6) besteht, von dem jeder symmetrische Teil ein Zweiflach umfaßt, das sich aus einer ersten dreieckigen Fläche (8), deren erste Seite (9) an die vordere horizontale Seite (1) des Spaltenbodens angrenzt, wobei eine zweite Seite (10) in dieser Symmetrieebene (II-II) liegt und die dritte Seite (11) von der Kante des Zweiflachs gebildet wird, und einer zweiten dreieckigen Fläche (12) zusammensetzt, von der eine erste Seite von der Kante des Zweiflachs gebildet wird, eine zweite Seite (13) an einen Abschnitt der Seitenfläche des Spaltenbodens angrenzt und die dritte Seite (14) von der Seitenfläche des Spaltenbodens bis zu der Spitze (15) der ersten Seite in dieser Symmetrieebene abfällt, wobei die Ebene der ersten Fläche (8) von der ersten vorderen Querseite (1) nach hinten abfällt, und aus einem zweiten hinteren Teil (7) in Form einer umgekehrten Pyramide besteht, von dem sich jeder symmetrische Teil aus einer dritten gekrümmten gleichsam dreieckigen Fläche (18), die von der dritten Seite (14) der zweiten Fläche (12) zu einer hinteren Öffnung (16) hin ausgeht, einer vierten trapezförmigen Fläche (19) zusammensetzt, deren große Basis (20) an den hinteren Abschnitt der Seitenfläche (3 oder 4) des Spaltenbodens angrenzt und deren kleine Basis in der Symmetrieebene liegt und mit der hinteren Öffnung (16) zusammenfällt, und deren schräge Seiten (21, 22) mit der dritten Seite (18) bzw. der fünften (23) gemein sind, wobei die fünfte dreieckige Fläche (23) eine Seite (24), die an die hintere querliegende Seite (2) des Spaltenbodens angrenzt und eine Seite in dieser Symmetrieebene aufweist, wobei die hintere Öffnung (16) am Boden des Behälters angeordnet und mit einem Abflußrohr (17) verbunden ist.

2. Güllesammelbehälter nach Anspruch 1, dadurch gekennzeichnet, daß die erste dreieckige Fläche (8) ein Gefälle von vorne nach hinten von ungefähr 2 bis 4% aufweist.

3. Güllesammelbehälter nach Anspruch 1, dadurch gekennzeichnet, daß die dritte Fläche (18) eine Linie mit größerem Gefälle von vorne nach hinten von ungefähr 12% aufweist.

4. Güllesammelbehälter nach Anspruch 1, dadurch gekennzeichnet, daß die zweite Fläche (12) ein Gefälle von der Seitenfläche zu der Mitte des Behälters hin von ungefähr 11% in dieser Symmetrieebene aufweist.

5. Güllesammelbehälter nach Anspruch 1, dadurch gekennzeichnet, daß die vierte Fläche (19) ein Gefälle von der Seitenfläche zu der hinteren Öffnung von ungefähr 10% aufweist.

6. Güllesammelbehälter nach einem der vorhergehenden Ansprüche, dadurch gekennzeichnet, daß der erste vordere Teil (6) ungefähr 2/3 der Gesamtlänge des Behälters einnimmt.
